(19) Europäisches Patentamt / European Patent Office / Office européen des brevets

(11) **EP 2 725 683 A1**

(12) **DEMANDE DE BREVET EUROPEEN**

(43) Date de publication:
**30.04.2014 Bulletin 2014/18**

(51) Int Cl.:
*H02J 7/00* (2006.01)     *H01M 10/48* (2006.01)
*H01M 10/0525* (2010.01)     *H01M 10/42* (2006.01)

(21) Numéro de dépôt: **13306431.1**

(22) Date de dépôt: **18.10.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **25.10.2012 FR 1202849**

(71) Demandeur: **IFP Energies nouvelles**
**92852 Rueil Malmaison Cedex (FR)**

(72) Inventeurs:
• **Ouzaarou, Hichame**
**93600 Aulnay sous Bois (FR)**
• **Almanza, Morgan**
**34730 Prades-le-Lez (FR)**

(54) **Convertisseur d'equilibrage pour batteries comprenant des moyens de diagnostic**

(57) L'invention concerne un convertisseur d'équilibrage de la charge de cellules (C) d'une batterie, le convertisseur étant du type non dissipatif avec une structure commutée (MC) et des moyens d'équilibrage. Le convertisseur comprend en outre des moyens de diagnostic (DIA) reliés à la matrice de commutation (MC) de la structure commutée.

Figure 7

EP 2 725 683 A1

**Description**

La présente invention concerne le domaine de l'équilibrage de la charge des batteries électriques, en particulier pour véhicules automobiles électriques ou hybrides.

Lorsqu'une batterie est utilisée notamment dans un véhicule électrique ou hybride, les cellules constituant la batterie subissent des cycles de charge et de décharge. La dispersion des caractéristiques des différentes cellules, particulièrement le rendement faradique, provoque au cours de la vie de la batterie des déséquilibres de charge. Or les cellules doivent rester dans une plage de fonctionnement bien définie.

Afin de maintenir la capacité de la batterie tout en prolongeant sa durée de vie et son utilisation en toute sécurité, l'équilibrage des différentes cellules constituant la batterie s'avère indispensable. L'équilibrage consiste à transférer des charges entre les cellules afin qu'elles aient toutes le même état de charge. En effet, dès qu'une cellule sort de sa plage de fonctionnement, c'est toute la batterie qui en pâtit. Pour maintenir les meilleures performances de la batterie, le système d'équilibrage doit intervenir au niveau de chaque cellule. Or la diminution de la tension est un facteur défavorable à la conversion d'énergie. De plus, pour que le système d'équilibrage soit efficace, il faut connaître l'état de charge de chaque cellule.

Dans la littérature plusieurs solutions sont proposées pour assurer l'équilibrage des cellules d'une batterie. Ces solutions peuvent être classées en deux familles : dissipatives et non dissipatives.

Dans le cas de la première famille, la mise en oeuvre est simple : une partie de l'énergie des cellules les plus chargées est dissipée, par exemple dans une résistance, ce qui diminue la charge de ces cellules et fortiori de la batterie.

Dans le cas des systèmes non dissipatifs, on transfère les charges d'une cellule à l'autre par charge ou par décharge de cellules. Ces systèmes non dissipatifs peuvent être classés en trois catégories, il s'agit de systèmes avec :

- une structure dite "commutée" : elle consiste à aiguiller la sortie d'un unique convertisseur statique sur la cellule désirée à l'aide d'une matrice (ou ensemble) d'interrupteurs commandés, également appelée matrice de commutation, cette technique utilise un nombre réduit de composants, ce qui permet de limiter l'encombrement. Ce type de structure est décrit notamment dans les documents suivants :

  o Fast battery equalization with isolated bidirectional DC-DC converter for PHEV applications, Ziling Nie and Chris Mi, Departement of electrical and computer engeneering, University of Michigan Dearborn, Journal IEEE 2009
  o Battery Cell Balancing: What to Balance and How, Yevgen Barsukov, Texas instruments.

- une structure "série" : le principe consiste à placer un convertisseur statique entre deux cellules successives. Généralement, ces structures comportent un nombre important de composants et ne permettent que des transferts entre cellules successives.
- une structure "parallèle" : des convertisseurs statiques permettent de coupler directement toutes les cellules entre elles via une isolation galvanique. De façon générale, cette structure est plus complexe à commander, car un même convertisseur pilote plusieurs cellules et nécessite l'utilisation d'un transformateur d'isolement. Ce transformateur d'isolement présente l'inconvénient d'un poids important, peu compatible avec l'intégration dans un véhicule. Pour palier cet inconvénient, il a été envisagé d'augmenter la fréquence de découpage, mais cette méthode accroît considérablement les pertes par commutation et conduction ainsi que les perturbations électromagnétiques.

Qu'ils soient dissipatifs ou non dissipatifs, les systèmes d'équilibrage ne permettent pas de réaliser des diagnostics de chaque batterie. En effet, les outils de diagnostic actuellement utilisés, tels que la spectroscopie d'impédance, ne peuvent pas être embarqués, sont volumineux et nécessitent du matériel indépendant du système d'équilibrage.

Pour palier ces inconvénients, l'invention concerne un convertisseur d'équilibrage de cellules d'une batterie, le convertisseur étant du type non dissipatif avec une structure commutée et comprenant en outre des moyens de diagnostic reliés à la matrice de commutation de la structure commutée. Ainsi, les moyens de diagnostic peuvent être embarqués et la matrice de commutation peut être utilisée pour le diagnostic et pour l'équilibrage le tout avec un encombrement limité.

**Le dispositif selon l'invention**

L'invention concerne un convertisseur d'équilibrage de cellules d'une batterie électrique, ledit convertisseur comprenant une matrice de commutation comportant une pluralité de commutateurs reliés auxdites cellules, et des moyens d'équilibrage reliés à ladite matrice de commutation et aptes à charger et/ou décharger chacune desdites cellules au moyen d'une commande de ladite matrice de commutation. Le convertisseur comprend en outre des moyens de diagnostic de cellule, lesdits moyens de diagnostic étant connectés à ladite matrice de commutation de telle sorte qu'une commande des commutateurs permette de connecter lesdits moyens de diagnostic à toute cellule à diagnostiquer.

Selon l'invention, lesdits moyens de diagnostic déterminent notamment l'état de charge et/ou l'état de santé de ladite au moins une cellule.

Avantageusement, lesdits moyens de diagnostic permettent de réaliser une spectroscopie d'impédance électrochimique.

De préférence, lesdits moyens de diagnostic sont formés par au moins un circuit constitué d'une source de courant et d'un capteur de tension.

De manière avantageuse, ladite source de courant est alimentée par ladite batterie.

Selon un mode de réalisation de l'invention, lesdits moyens d'équilibrage comprennent un convertisseur statique du type cellule à cellule ou cellule à batterie ou batterie à cellule ou bidirectionnel.

En outre, lesdits commutateurs peuvent être des interrupteurs à semi-conducteur, notamment du type MOSFET ou des relais statiques.

Avantageusement, lesdits moyens d'équilibrage et lesdits moyens de diagnostic sont utilisés alternativement.

De manière avantageuse, l'équilibrage de la charge est réalisé en fonction d'au moins un diagnostic mis en oeuvre préalablement.

Selon un mode de réalisation de l'invention, ladite batterie est composée de cellules lithium-ion.

L'invention concerne également un véhicule électrique ou hybride, notamment automobile, comprenant une batterie électrique constituée d'une pluralité de cellules. Le véhicule comprend un convertisseur d'équilibrage tel que défini précédemment pour équilibrer la charge desdites cellules.

## Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.

La figure 1 est un schéma représentatif du convertisseur d'équilibrage selon l'invention.
La figure 2 représente un convertisseur DCDC utilisé par le dispositif selon l'invention.
La figure 3 représente la matrice de commutation et les moyens d'équilibrage pour un convertisseur d'équilibrage selon un premier mode de réalisation de l'invention.
La figure 4 représente la matrice de commutation et les moyens d'équilibrage pour un convertisseur d'équilibrage selon un deuxième mode de réalisation de l'invention.
La figure 5 représente la matrice de commutation et les moyens d'équilibrage pour un convertisseur d'équilibrage selon un troisième mode de réalisation de l'invention.
La figure 6 représente des moyens de diagnostic pour un convertisseur d'équilibrage selon l'invention.
La figure 7 illustre un convertisseur d'équilibrage selon le premier mode de réalisation de l'invention.
La figure 8 illustre un convertisseur d'équilibrage selon le deuxième mode de réalisation de l'invention.
La figure 9 illustre un convertisseur d'équilibrage selon un quatrième mode de réalisation de l'invention.

## Description détaillée de l'invention

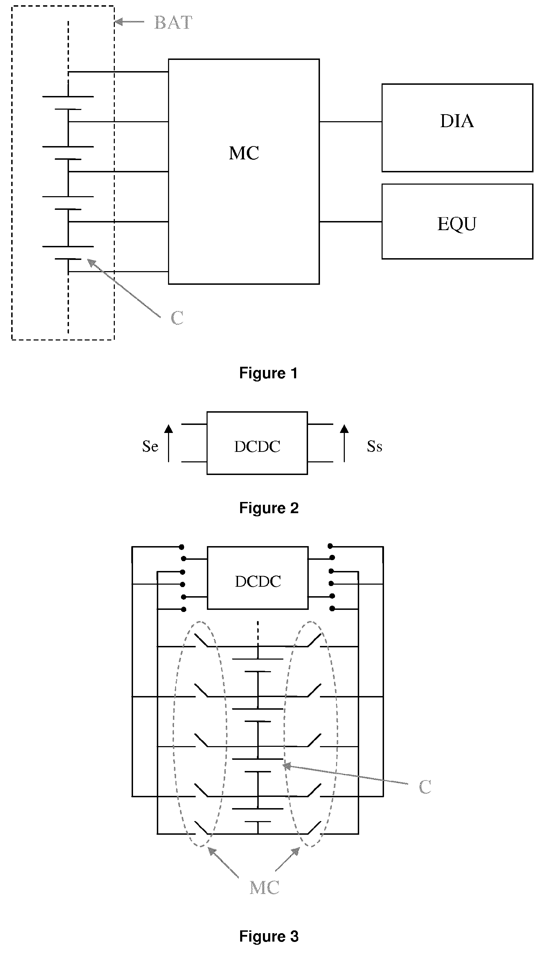

La figure 1 représente schématiquement un convertisseur d'équilibrage selon l'invention. Le convertisseur selon l'invention permet d'équilibrer la charge des cellules (C) d'une batterie (BAT). Le convertisseur comporte une matrice de commutation (MC) formée d'une pluralité de commutateurs commandés et reliés aux cellules (C) et des moyens d'équilibrage (EQU) reliés à la matrice de commutation (MC) et aptes à charger et/ou décharger chacune des cellules (C). Selon l'invention, le convertisseur est du type non dissipatif et possède une structure dite commutée. On commande les commutateurs de la matrice de commutation (MC) de manière à charger ou décharger une cellule (C). En outre, le convertisseur selon l'invention comporte des moyens de diagnostic (DIA) d'au moins une cellule (C) de la batterie (BAT). Le montage selon l'invention contient un seul convertisseur statique isolé qui vient "glisser" sur la cellule à équilibrer via la matrice de commutation (MC), le fonctionnement est similaire pour la cellule à diagnostiquer. Par cette mutualisation des moyens de commutation, les moyens de diagnostic peuvent être embarqués, le nombre de composants utilisés est limité, et l'encombrement du convertisseur d'équilibrage est réduit.

On appelle moyens de diagnostic (DIA) des moyens permettant de tester l'état des cellules (C) de la batterie (BAT), notamment par détermination de leur état de charge, noté SoC (de l'anglais State of Charge) et de leur état de santé, noté SoH (de l'anglais State of Health) qui représente le vieillissement de la cellule. De manière préférentielle, pour la détermination de cet état de charge et de cet état de santé, on détermine une impédance en mettant en oeuvre une spectroscopie d'impédance électrochimique EIS (de l'anglais Electrochemical Impedance Spectroscopy). L'impédance électrochimique d'une cellule est définie comme la fonction de transfert entre la différence de potentiel aux bornes de la cellule et le courant la traversant. C'est une grandeur complexe qui est généralement déterminée par l'analyse fréquentielle de la réponse d'un signal d'excitation. En principe, n'importe quel type d'excitation peut être utilisé. La littérature fait état de trois types d'excitation particulièrement intéressants et qui sont adaptés aux moyens de diagnostic selon l'invention, il s'agit de :

a) signal d'excitation sinusoïdale à différentes fréquences. On calcule $\Delta I = I_{max} \sin(2\pi f t)$ et $\Delta V = V_{max} \sin(2\pi f t +$

$\phi)$ pour déterminer l'impédance au moyen d'une formule du type $Z(f) = \dfrac{V_{max}}{I_{max}} e^{j\phi}$.

b) signal impulsionnel, la mesure est alors appelé impédancemétrie impulsionnelle. Le document suivant décrit une méthode mettant en oeuvre ce type d'excitation : "Diagnostic de batteries Lithium-ion dans des applications embarquées, Dinh Vinh Do, Laboratoire d'électromécanique de Compiègne, 2010."
c) signal d'excitation aléatoire basé sur le bruit présent dans les cellules. La demande de brevet FR 2 956 743 A décrit une méthode mettant en oeuvre cette technique.

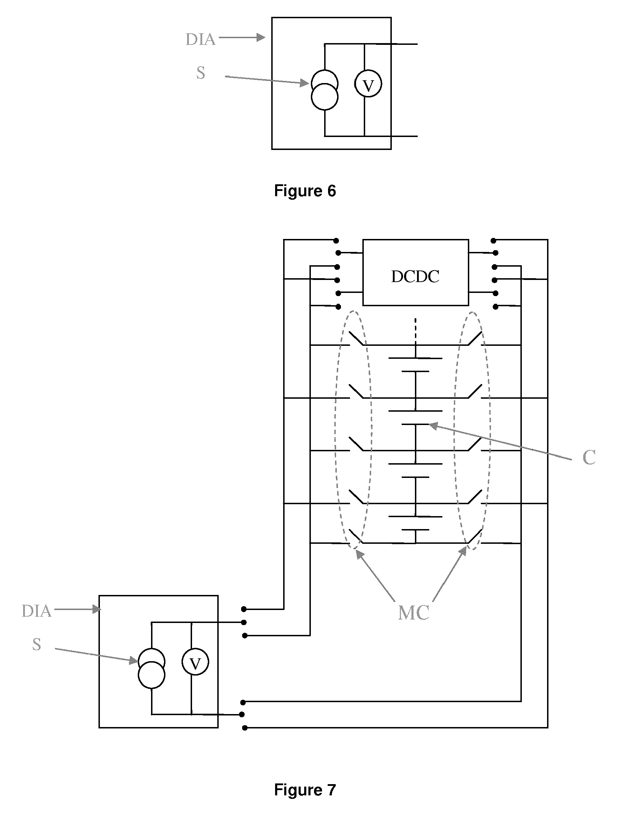

La figure 6 représente des moyens de diagnostic (DIA) pouvant être utilisés pour le convertisseur d'équilibrage selon l'invention. Tel que représenté, les moyens de diagnostic (DIA) permettent de réaliser une spectroscopie d'impédance électrochimique au moyen d'une source de courant (S) pour l'excitation (par exemple par génération d'un signal sinusoïdal ou impulsionnel) et un capteur de tension ou un voltmètre (V) pour la mesure de la tension. De préférence, la source de courant (S) est alimentée par la batterie. Puis, par analyse du signal on détermine l'impédance, puis on en déduit l'état de charge SoC et l'état de santé SoH.
L'intégration des fonctions d'équilibrage et de diagnostic est permise car la matrice de commutation permet un multiplexage "spatiotemporel" : d'une part le multiplexage spatial permet de réaliser les deux fonctions alternativement, et d'autre part, le multiplexage temporel est utilisé, car les fonctions n'ont pas besoin d'être réalisées au même moment.
Selon l'invention, les moyens d'équilibrage (EQU) peuvent mettre en oeuvre l'une des quatre techniques d'équilibrage suivantes : cellule à cellule, cellule à batterie, batterie à cellule ou bidirectionnel. En fonction de la technique d'équilibrage choisie on définit un convertisseur statique adapté au transfert d'énergie. On rappelle qu'un convertisseur statique, tel que représenté en figure 2, est un système permettant d'adapter une source d'énergie électrique (Se) à un récepteur donné, ou source de sortie (Ss). Un convertisseur statique continu-continu (ou DCDC) avec éventuellement une isolation galvanique permet d'obtenir une tension ondulée de valeur moyenne réglable à partir d'une source de tension fixe. On appelle également ce type de convertisseur statique un hacheur.
Suivant le type de sources entrée (Se) et sortie (Ss) (cf. figure 2) à connecter, il existe quatre types de convertisseur DCDC :

■ hacheur série pour connecter une source de tension d'entrée à une source de courant en sortie,
■ hacheur parallèle pour connecter une source de courant d'entrée à une source de tension en sortie,
■ hacheur à stockage capacitif pour connecter deux sources de courant, et
■ hacheur à stockage inductif pour connecter deux sources de tension.

Les caractéristiques du convertisseur statique dépendent de la technologie d'équilibrage et sont résumé dans le Tableau 1.

*Tableau 1- caractéristiques du convertisseur statique*

| Techniques d'équilibrage | Choix du convertisseur statique (CS) | | | |
|---|---|---|---|---|
| | Isolation | Réversibilité en courant | élévateur/abaisseur | Type |
| Cellule à cellule | oui | oui | les deux | Convertisseur statique de type hacheur à stockage inductif (ex : Flyback) |
| Cellule à batterie | oui | non | élévateur | |
| Batterie à cellule | oui | non | abaisseur | |
| Bidirectionnel | oui | oui | les deux | |

Les figures 3 à 5 présentent différentes matrices de commutation associées à leur convertisseur statique pour des techniques de transfert d'énergie différentes. Sur ces figures ainsi que sur les figures 7 à 9, un ensemble de trois points non reliés indique la présence d'un interrupteur pouvant fermer l'une ou l'autre partie du circuit.
Pour un transfert d'énergie d'une cellule X à une cellule Y quelconque, on peut utiliser la configuration de la figure 2 dans laquelle la matrice de commutation (MC) est réalisée avec 2N+2 interrupteurs pour N cellules (C). Selon ce mode de réalisation, on ferme les interrupteurs de la matrice de commutation (MC) de manière à connecter la cellule la moins chargée à la cellule la plus chargée afin de permettre leur charge et décharge respectives. Pour ce mode de réalisation, l'entrée du convertisseur statique (DCDC) peut être reliée à une cellule à décharger par la fermeture de deux commutateurs de la matrice de commutation (MC), et la sortie du convertisseur statique peut être reliée à une cellule à charger par fermeture de deux commutateurs de la matrice de commutation (MC). Un convertisseur statique du type DCDC (continu - continu) non réversible permet l'ensemble des transferts souhaités. Notons qu'il est aussi possible avec cette configuration de réaliser des transferts batterie vers cellule et réciproquement avec un dimensionnement adéquat du convertisseur statique DCDC et par une commande adaptée de la matrice de commutation (MC).

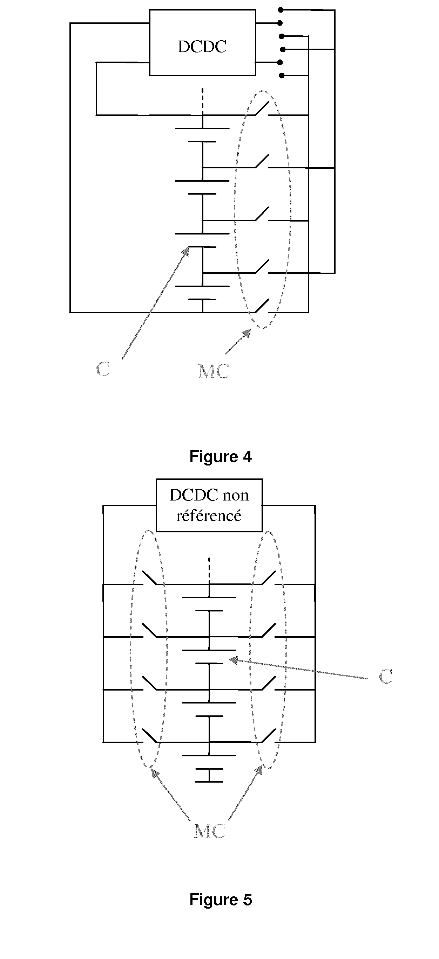

Alternativement, si l'on opère uniquement des transferts batterie à cellule, la configuration de la figure 4 est plus adaptée. Par cette solution, on utilise un nombre réduit de commutateurs pour la matrice de commutation (MC) par rapport à la solution précédente : pour ce mode de réalisation, N+1 commutateurs sont utilisés pour N cellules (C). En outre, l'entrée du convertisseur statique est reliée à la batterie (c'est à dire à la totalité des cellules) et sa sortie peut être reliée à une cellule (C) à charger par la fermeture de deux commutateurs. Si l'on souhaite des transferts bidirectionnels, on utilise un convertisseur statique DCDC réversible, sinon, c'est-à-dire si les transferts se font que dans un sens, on utilise un convertisseur statique DCDC non réversible.

Selon un troisième mode de réalisation de l'invention, on peut utiliser un convertisseur statique DCDC non référencé (par rapport au 0V batterie) connecté à la matrice de commutation (MC). Ce type de convertisseur présente l'avantage d'être dimensionné pour des faibles tensions (qui correspondent à la différence de potentiel entre deux cellules). La figure 4 représente un montage des moyens d'équilibrage selon ce mode de réalisation, la matrice de commutation (MC) comporte dans ce cas 2N interrupteurs pour N cellules (C).

La matrice de commutation (MC) peut être réalisée avec :

■ des interrupteurs à semi-conducteur de type MOSFET (c'est-à-dire un transistor à effet de champ à grille isolée, MOSFET étant l'acronyme anglais de Metal Oxide Semiconductor Field Effect Transistor), ou
■ des relais statiques (ou SSR - de l'anglais Solid State Relais) qui sont des interrupteurs totalement isolés et peu couteux jusqu'à 1A et qui sont commercialisés sous forme de circuits intégrés comportant 2 ou 4 interrupteurs.

Dans les deux cas, le dimensionnement de la matrice de commutation (MC) dépend du rapport Ieq_max / Qeq_max, respectivement courant d'équilibrage maximum et quantité de charge maximum à transférer par cellule.

Les figures 7 à 9 représentent des convertisseurs d'équilibrage selon l'invention avec différents moyens d'équilibrage.

La figure 7 correspond au premier mode de réalisation de la figure 3 (transfert cellule à cellule), dans lequel on a rajouté les moyens de diagnostic (DIA) illustrés en figure 6.

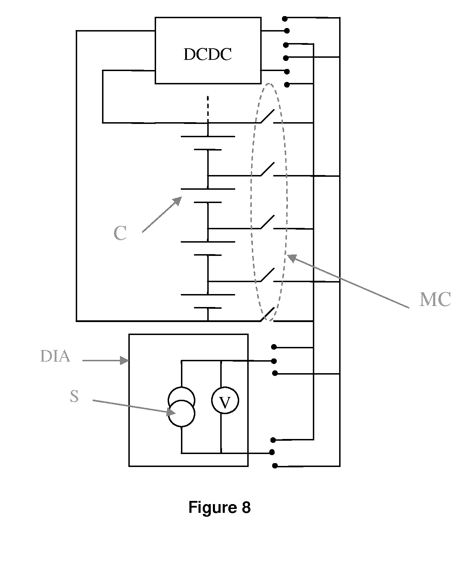

La figure 8 correspond au deuxième mode de réalisation de la figure 4 (transfert batterie à cellule), dans lequel on a rajouté les moyens de diagnostic (DIA) illustrés en figure 6.

L'avantage de l'invention est d'avoir une seule source d'excitation puissante (qui peut être alimentée par la batterie) ainsi qu'un seul convertisseur statique. Toutefois, il existe plusieurs configurations de matrice de commutation (MC) permettant de mutualiser l'électronique de diagnostic et d'équilibrage.

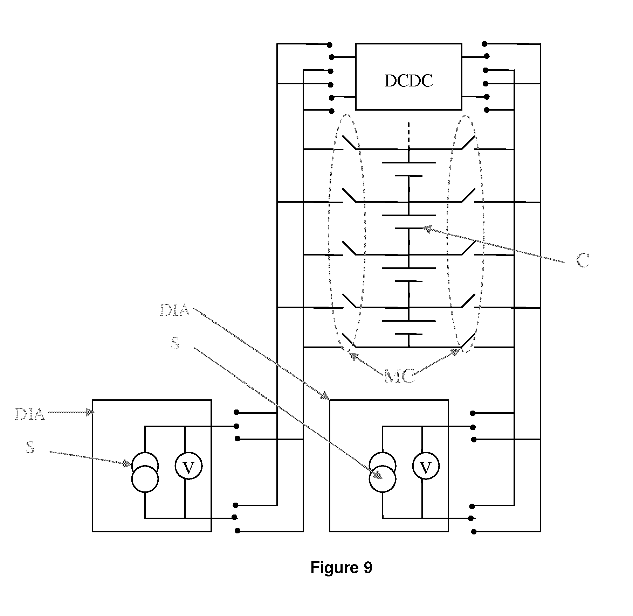

Si la matrice de commutation (MC) le permet, on peut aussi par exemple envisager de réaliser deux mesures d'impédance (ou plus) simultanément. Pour cela, les moyens de diagnostic peuvent être constitués de deux circuits formés chacun par une source (S) de courant et un capteur de tension ou un voltmètre (V). La figure 9 en est une illustration pour l'équilibrage cellule à cellule (correspondant à la figure 3). Ce quatrième mode de réalisation permet notamment un gain de temps lors du diagnostic.

Pour équilibrer la charge des cellules et pour réaliser le diagnostic, on commande les commutateurs de la matrice de commutation (MC). Pour commander l'ouverture et la fermeture des commutateurs de la matrice de commutation (MC) dans le cas de l'équilibrage, différents algorithmes peuvent être utilisés. On peut notamment détecter la cellule la plus chargée et la cellule la moins chargée et on réalise la charge de la cellule la moins chargée par la cellule la plus chargée et on répète cette opération jusqu'à ce que la différence de charge entre les différentes cellules soit inférieure à un seuil. Pour cette détection de l'état de charge des cellules, on utilise les diagnostics préalablement réalisés par les moyens de diagnostic (DIA). Pour la commande des commutateurs de la matrice de commutation (MC) dans le cas du diagnostic, on peut prévoir différentes stratégies de diagnostic : par exemple diagnostiquer chaque cellule les unes après les autres (ou dans un ordre préétabli), diagnostiquer en priorité certaines cellules en fonction d'un historique (comportement de la cellule en cyclage) enregistré. Cette commande de la matrice de commutation est réalisée par le système de gestion de la batterie (BMS de l'anglais Battery Management System).

Les convertisseurs d'équilibrage selon l'invention sont utilisables pour tous les types de batterie, mais sont particulièrement adaptés aux batteries lithium-ion. En effet, une charge mal maîtrisée pour cette technologie peut conduire à la destruction de l'accumulateur.

L'invention peut être embarquée à bord de véhicules électriques ou hybrides comprenant une batterie, les véhicules étant notamment des véhicules automobiles.

**Revendications**

1. Convertisseur d'équilibrage de cellules d'une batterie électrique, ledit convertisseur comprenant une matrice de commutation (MC) comportant une pluralité de commutateurs reliés auxdites cellules (C), et des moyens d'équilibrage (EQU) reliés à ladite matrice de commutation (MC) et aptes à charger et/ou décharger chacune desdites cellules (C) au moyen d'une commande de ladite matrice de commutation (MC), **caractérisé en ce qu'**il comprend en outre des moyens de diagnostic (DIA) de cellule (C), lesdits moyens de diagnostic (DIA) étant connectés à ladite matrice de commutation (MC) de telle sorte qu'une commande des commutateurs permette de connecter lesdits moyens de diagnostic (DIA) à toute cellule à diagnostiquer.

2. Convertisseur selon la revendication 1, dans lequel lesdits moyens de diagnostic (DIA) déterminent notamment l'état de charge et/ou l'état de santé de ladite au moins une cellule.

3. Convertisseur selon l'une des revendications précédentes, dans lequel lesdits moyens de diagnostic (DIA) permettent de réaliser une spectroscopie d'impédance électrochimique.

4. Convertisseur selon la revendication 3, dans lequel lesdits moyens de diagnostic (DIA) sont formés par au moins un circuit constitué d'une source (S) de courant et d'un capteur de tension (V).

5. Convertisseur selon la revendication 4, dans lequel ladite source (S) de courant est alimentée par ladite batterie.

6. Convertisseur selon l'une des revendications précédentes, dans lequel lesdits moyens d'équilibrage (EQU) comprennent un convertisseur statique du type cellule à cellule ou cellule à batterie ou batterie à cellule ou bidirectionnel.

7. Convertisseur selon l'une des revendications précédentes, dans lequel lesdits commutateurs sont des interrupteurs à semi-conducteur, notamment du type MOSFET ou des relais statiques.

8. Convertisseur selon l'une des revendications précédentes, dans lequel lesdits moyens d'équilibrage (EQU) et lesdits moyens de diagnostic (DIA) sont utilisés alternativement.

9. Convertisseur selon l'une des revendications précédentes, dans lequel l'équilibrage de la charge est réalisé en fonction d'au moins un diagnostic mis en oeuvre préalablement.

10. Convertisseur selon l'une des revendications précédentes, dans lequel ladite batterie est composée de cellules (C) lithium-ion.

11. Véhicule électrique ou hybride, notamment automobile, comprenant une batterie électrique constituée d'une pluralité de cellules, **caractérisé en ce qu'**il comprend un convertisseur d'équilibrage selon l'une des revendications précédentes pour équilibrer la charge desdites cellules.

**Figure 1**

**Figure 2**

**Figure 3**

**Figure 4**

**Figure 5**

DIA

S

V

**Figure 6**

DCDC

C

MC

DIA

S

V

**Figure 7**

Figure 8

Figure 9

**EP 2 725 683 A1**

Europäisches
Patentamt

European
Patent Office

Office européen
des brevets

# RAPPORT DE RECHERCHE EUROPEENNE

Numéro de la demande

EP 13 30 6431

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2004/049540 A2 (TIAX LLC [US]; CHERTOK ALLAN [US]; FOWLER THOMAS J [US]; KING DARRELL) 10 juin 2004 (2004-06-10) * le document en entier * ----- | 1-11 | INV. H02J7/00 H01M10/48 ADD. |
| X | US 2008/211459 A1 (CHOI WON-SUK [KR]) 4 septembre 2008 (2008-09-04) * alinéa [0049] * * alinéa [0051] * ----- | 1 | H01M10/0525 H01M10/42 |

DOMAINES TECHNIQUES RECHERCHES (IPC)

H02J
H01M

Le présent rapport a été établi pour toutes les revendications

| Lieu de la recherche | Date d'achèvement de la recherche | Examinateur |
|---|---|---|
| Munich | 8 janvier 2014 | Castagné, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

..........................................................................
& : membre de la même famille, document correspondant

EPO FORM 1503 03.82 (P04C02)

**EP 2 725 683 A1**

ANNEXE AU RAPPORT DE RECHERCHE EUROPEENNE
RELATIF A LA DEMANDE DE BREVET EUROPEEN NO.

EP 13 30 6431

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-01-2014

| Document brevet cité au rapport de recherche | | Date de publication | Membre(s) de la famille de brevet(s) | | Date de publication |
|---|---|---|---|---|---|
| WO 2004049540 | A2 | 10-06-2004 | AU | 2003295715 A1 | 18-06-2004 |
| | | | EP | 1568114 A2 | 31-08-2005 |
| | | | JP | 4343173 B2 | 14-10-2009 |
| | | | JP | 2006507790 A | 02-03-2006 |
| | | | US | 2004135544 A1 | 15-07-2004 |
| | | | US | 2004135545 A1 | 15-07-2004 |
| | | | US | 2004135546 A1 | 15-07-2004 |
| | | | US | 2008191663 A1 | 14-08-2008 |
| | | | WO | 2004049540 A2 | 10-06-2004 |
| US 2008211459 | A1 | 04-09-2008 | JP | 4342583 B2 | 14-10-2009 |
| | | | JP | 2008220151 A | 18-09-2008 |
| | | | KR | 20080080864 A | 05-09-2008 |
| | | | US | 2008211459 A1 | 04-09-2008 |

EPO FORM P0460

Pour tout renseignement concernant cette annexe : voir Journal Officiel de l'Office européen des brevets, No.12/82

13

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2956743 A